# NEUE EUROPÄISCHE PATENTSCHRIFT

(11) **EP 0 730 819 B2**
(45) Veröffentlichungstag und Bekanntmachung des Hinweises auf die Entscheidung über den Einspruch: **02.01.2003**
(45) Hinweis auf die Patenterteilung: 10.06.1998
(21) Anmeldenummer: 96102420.5
(22) Anmeldetag: 17.02.1996
(51) Int. Cl.: A01C 7/08

(54) **Vorrichtung zur Schaffung von Fahrgassen mit einer Sämaschine**
Device for creating travel lanes with a sowing machine
Dispositif pour créer des voies de cheminement avec un semoir

(30) Priorität: 10.03.1995 DE 19508562
(43) Veröffentlichungstag der Anmeldung: 11.09.1996
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE)
(74) Vertreter: Schuster, Thomas, Dipl.-Phys.

(56) Entgegenhaltungen:
- EP-A- 0 578 988
- DE-A- 3 025 176
- DE-A- 3 502 011
- DE-A- 4 342 171
- DE-A- 4 423 083

## Beschreibung

Die Erfindung betrifft eine Vorrichtung zur Schaffung von Fahrgassen mit einer Sämaschine gemäß des Oberbegriffes des Patentanspruches 1.

Eine derartige Vorrichtung ist beispielsweise durch die DE-PS 30 25 176 bekannt. Diese Sämaschine weist eine Schaltvorrichtung auf, so daß in bestimmten Abständen Fahrgassen anlegbar sind. Hierzu wird in bestimmten Intervallen die Saatgutzufuhr zu bestimmten Säscharen unterbrochen, so daß kein Saatgut in die Bahnen für die sogenannten Fahrgassen fällt. Die Schaltvorrichtung wird bei dieser bekannten Sämaschine durch die manuelle Umschalteinrichtung für die wechselseitig anheb- und absenkbaren Spuranreißer betätigt. Dieses System hat bereits Vorteile gegenüber anderen bekannten Systemen, jedoch ist es immer noch erforderlich, daß der Fahrer des die Sämaschine ziehenden Schleppers sich immer vergewissern muß, ob tatsächlich die anheb- und absenkbaren Spuranreißer, und somit die Fahrgassenschaltung weiter geschaltet worden ist. Trotzdem kann es immer wieder vorkommen, daß Fehlschaltungen erzeugt werden, so daß der Fahrgassenrythmus durcheinander gerät.

Der Erfindung liegt die Aufgabe zugrunde, die bekannte Vorrichtung derart zu verbessern, daß eine sichere Weiterschaltung der Fahrgassenschaltung im richtigen Fahrgassenrhythmus bzw. das Anlegen der Fahrgassen in den richtigen Abständen zueinander sichergestellt ist.

Diese Aufgabe wird erfindungsgemäß durch den kennzeichnenden Teil des Anspruchs 1 gelöst. Infolge dieser Maßnahme wird über den Positionsgeber in Verbindung mit dem in einem Rechner eingegebenen Fahrgassenschema für das zu besäende Feld überprüft, ob die Fahrgasse an der richtigen Stelle und im richtigen Abstand zum Feldrand und zu der vorhergehenden Fahrgasse angelegt worden ist. Falls die Fahrgasse in einem falschen Rhythmus angelegt wird, wird dem Fahrer ein Signal gegeben bzw. wird durch die Vorrichtung die Fahrgasse automatisch im richtigen Abstand angelegt, in dem die Schaltvorrichtung automatisch notfalls korrigiert wird.

Weiterhin ist vorgesehen, daß die Schaltvorrichtung nur geschaltet wird, wenn die Bewegungsrichtung der Sämaschine mit der Vorgabe des Fahrgassensystems übereinstimmt. Diese Bewegungsumkehr wird ebenfalls von dem Positionsgeber überwacht und ermittelt bzw. erkannt.

Wenn die Fahrgassenschaltung mittels des Aushebevorgangs am Feldende weiter geschaltet wird, wird dieser Schaltvorgang von dem Positionsgeber überwacht. Der Fahrgassenrythmus wird also mit dem eingegebenen Fahrgassenrythmus überwacht und verglichen. Somit ist auf einfachste Weise immer feststellbar, ob die Fahrgassen richtig angelegt werden.

Desweiteren ist vorgesehen, daß der Positionsgeber an eine Überwachungsvorrichtung Signale abgibt, und daß es in Verbindung mit dem Positionsgeber feststellbar ist, ob die Sämaschine sich im richtigen Fahrgassenrythmus befindet. Somit ist auf einfachste Weise gewährleistet, daß die Fahrgassen im richtigen Abstand auf dem Feld angelegt werden.

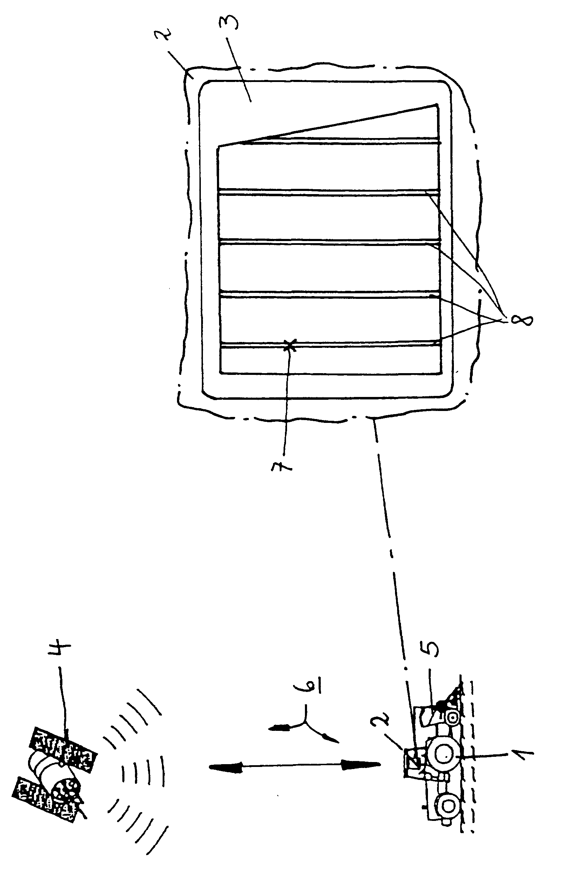

Desweiteren ist vorgesehen, daß bei einem gewählten Fahrgassensystem die optimal anzulegenden Fahrgassen durch einen Rechner ermittelbar und/oder auf einem Bildschirm anzeigbar sind. Hierbei weist die Vorrichtung vorzugsweise einen Rechner auf, mittels dem, wenn die Kontur und die Ausmaße des zu besäenden Feldes sowie die Arbeitsbreiten der Dünge- und Spritzmittelgeräte in den Rechner eingegeben sind, das optimale Fahrgassensystem errechnet wird. Vorteilhaft ist hierbei, daß auf dem Bildschirm die Fahrgassen, wie sie auf dem Feld angelegt werden sollen, angezeigt werden und daß dann in einer Weiterbildung der Erfindung auch noch die momentane Position der landwirtschaftlichen Maschine auf dem Bildschirm angezeigt werden kann. Weitere Einzelheiten der Erfindung sind den übrigen Ansprüchen, der Beispielsbeschreibung und der Zeichnung zu entnehmen.

Die Zeichnung zeigt in schematischer Darstellung die Vorrichtung zur Schaffung von Fahrgassen mit einer Sämaschine.

Auf dem Ackerschlepper 1 ist die zentrale Rechnerstation 2, die den in vergrößerter Darstellung dargestellten Monitor 3 aufweist, angeordnet. In diese zentrale Rechnerstation 2 sind über geeignete Eingabevorrichtungen, wie beispielsweise eine Tastatur, eine Chipkarte, welche über einen auf dem Hof vorhandenen Rechner mit entsprechenden Daten versorgt ist, zu speichern, so daß dieser Rechnerstation 2 die Geographie der Betriebsfläche und evtl. Daten für die Materialverteilung zu übermitteln und in den Rechner einzuspeichern sind. Der Rechner 2 arbeitet mit einem GPS-System 4 zusammen, um den exakten Standort der Sämaschine 5 zu ermitteln. Durch die Zusammenarbeit des Rechners 2 mit dem GPS-System 4 ist also ein Positionsgeber 6 zum Erzeugen von Feldkoordinatensignalen zu Angaben zur relativen Position des Fahrzeuges 5 auf dem Feld vorhanden. Somit wird also über den Rechner und dem GPS-System 4 der jeweils aktuelle Standort des Schleppers 1 bzw. der Sämaschine 5 auf dem Acker bestimmt. Der aktuelle Standort, wird auf dem Bildschirm 3, in der Zeichnung durch das Kreuz 7, angezeigt.

Die Sämaschine 5 ist mit einer Schaltvorrichtung ausgerüstet, so daß in bestimmten Abständen Fahrgassen 8, wie sie auf dem Bildschirm 3 angezeigt sind, anlegbar sind.

Der Rechner 2 ist derart ausgebildet, daß aufgrund der Geographie und der vorgegebenen Arbeitsbreiten der auf dem Feld zum Einsatz kommenden Maschinen, wie Sämaschinen, Düngerstreuer, Feldspritzen etc. das optimale Fahrgassensystem auswählt bzw. mit einem geeigneten Programm errechnet. Hierzu sind, wie bereits gesagt, die einzelnen Parameter dem Rechner 1 mitzuteilen. Das Feld und die auf dem Feld angelegten Fahrgassen werden, wie die Zeichnung zeigt, auf dem Bildschirm 3 angezeigt. Die jeweils momentane Position der Sämaschine 5 wird auf dem Bildschirm 3 angezeigt, wie dieses mit dem Kreuz 7 gekennzeichnet ist.

Die Schaltvorrichtung, mittels der die Fahrgassen in bestimmten Abständen angelegt werden, wird mittels des Positionsgebers 6 durch den Rechner 2 betätigt, überwacht oder notfalls korrigiert. Der Positionsgeber 6 gibt somit an die Überwachungsvorrichung, die in den Rechner 2 integriert ist, Signale ab und zeigt diese erforderlichenfalls auf dem Bildschirm 3 an. Somit ist also in Verbindung mit dem Positionsgeber 6 durch den Rechner 2 eststellbar, ob sich die Sämaschine 5 im richtigen Fahrgassenrythmus befindet. Somit ist also immer gewährleistet, daß die Fahrgassen in dem richtigen Abstand zum Feldrand und zueinander angelegt werden.

## Patentansprüche

1. Vorrichtung zur Schaffung von Fahrgassen mit einer Sämaschine, wobei die Vorrichtung eine Schaltvorrichtung aufweist, so daß in bestimmten Abständen Fahrgassen anlegbar sind, **dadurch gekennzeichnet, daß** ein Positionsgeber (2,4,6) zum Erzeugen von Feldkoordinatensignalen zur Angabe der relativen Position des Fahrzeuges (1,5) auf dem Feld vorgesehen ist, daß mit Hilfe des Positionsgebers (2,4,6) die Schaltvorrichtung betätigbar bzw. überwach- und/oder korrigierbar ist, und zwar derart, daß bei Erreichen des vorgegebenen Abstandes der anzulegenden Fahrgassen zu den jeweils benachbarten Fahrgassen die Schaltvorrichtung zum Anlegen der Fahrgassen geschaltet wird.

2. Vorrichtung nach Anspruch 1, **dadurch gekennzeichnet, daß** die Schaltvorrichtung nur geschaltet wird, wenn die Bewegungsrichtung der Sämaschine (5) mit der Vorgabe des Fahrgassensystems übereinstimmt.

3. Vorrichtung nach einem oder mehreren der vorstehend genannten Ansprüche, **dadurch gekennzeichnet, daß** die Fahrgassenschaltung mittels des Aushebevorgangs am Feldende geschaltet wird.

4. Vorrichtung nach einem oder mehreren der vorstehenden Ansprüche, **dadurch gekennzeichnet, daß** die Schaltvorrichtung über dem Positionsgeber (2,4,6) geschaltet wird.

5. Vorrichtung nach einem oder mehreren der vorstehenden Ansprüche, **dadurch gekennzeichnet, daß** der Positionsgeber (2,4,6) an eine Überwachungsvorrichtung Signale abgibt, und daß in Verbindung mit dem Positionsgeber (2,4,6) feststellbar ist, ob sich die Sämaschine (5) im richtigen Fahrgassenrythmus befindet.

6. Vorrichtung nach einem oder mehreren der vorstehenden Ansprüche, **dadurch gekennzeichnet, daß** bei einem gewählten Fahrgassensystem die optimal anzulegenden Fahrgassen durch einen Rechner (4) ermittelbar und/oder auf einem Bildschirm (3) anzeigbar sind.

7. Vorrichtung nach einem oder mehreren der vorstehenden Ansprüche, **dadurch gekennzeichnet, daß** die jeweils momentane Position der landwirtschaftlichen Maschine (5) auf dem Bildschirm (3) angezeigt wird.

## Claims

1. Apparatus for creating tramlines with a seed drill, the apparatus having a switching apparatus, so that tramlines can be produced at predetermined spacings from one another, **characterised in that** a position transmitter (2, 4, 6) is provided to generate field co-ordinate signals to indicate the relative position of the vehicle (1, 5) in the field, **in that** the switching apparatus can be actuated or monitored and/or corrected by means of the position transmitter (2, 4, 6), that is to say in such a manner that the switching apparatus is switched to produce the tramlines when the prescribed spacing between the tramlines to be produced and the actually adjacent tramlines is reached.

2. Apparatus according to claim 1, **characterised in that** the switching apparatus is only switched when the direction of movement of the seed drill (5) coincides with the guideline set by the tramline system.

3. Apparatus according to one or more of the above-mentioned claims, **characterised in that** the feed control for the tramlines is operated by means of the pick-up process at the end of the field.

4. Apparatus according to one or more of the preceding claims, **characterised in that** the switching apparatus is switched via the position transmitter (2, 4, 6).

5. Apparatus according to one or more of the preceding claims, **characterised in that** the position transmitter (2, 4, 6) issues signals to a monitoring device, and **in that** it is ascertainable, in conjunction with the position transmitter (2, 4, 6), whether the seed drill (5) is in the correct rhythm for the tramlines.

6. Apparatus according to one or more of the preceding claims, **characterised in that**, with a selected tramline system, the tramlines to be produced in optimum manner can be detected by a computer (4) and/or can be displayed on a display screen (3).

7. Apparatus according to one or more of the preceding claims, **characterised in that** the actual instantaneous position of the agricultural machine (5) is displayed on the display screen (3).

## Revendications

1. Dispositif pour créer des voies de circulation à l'aide d'un semoir, ce dispositif comportant un dispositif de commutation permettant de réaliser des voies de circulation à des intervalles déterminés, **caractérisé en ce qu'**il est prévu un générateur de position (2, 4, 6) pour générer des signaux de coordonnées du champ, destinés à indiquer la position relative du véhicule (1, 5) sur le champ, le dispositif de commutation pouvant être actionné, surveillé et/ou corrigé à l'aide du capteur de position (2, 4, 6), et cela de façon qu'en atteignant la distance prédéterminée des voies de circulation à réaliser, on commute vers les voies de circulation voisines respectives du dispositif de commutation pour réaliser les voies de circulation.

2. Dispositif selon la revendication 1,
**caractérisé en ce que**
le dispositif de commutation n'est actionné que si le sens de déplacement du semoir (5) correspond à ce qui a été prédéterminé par le système de voies de circulation.

3. Dispositif selon l'une ou plusieurs des revendications précédentes,
**caractérisé en ce que**
le circuit à voies de circulation est commuté à l'aide de l'opération de relevage à l'extrémité du champ.

4. Dispositif selon l'une quelconque des revendications précédentes,
**caractérisé en ce que**
le dispositif de commutation est commuté par l'intermédiaire d'un générateur de position (2, 4, 6).

5. Dispositif selon l'une ou plusieurs des revendications précédentes,
**caractérisé en ce que**
le générateur de position (2, 4, 6) fournit des signaux a un dispositif de surveillance et, en liaison avec le capteur de position (2, 4, 6), on détermine si le semoir (5) se trouve dans le rythme correct des voies de circulation.

6. Dispositif selon l'une ou plusieurs des revendications précédentes,
**caractérisé en ce que**
dans le cas du système de voies de circulation choisi, les voies de circulation à réaliser de manière optimale sont déterminées par un calculateur (4) et/ou sont affichées sur un écran-image (3).

7. Dispositif selon l'une ou plusieurs des revendications précédentes,
**caractérisé en ce que**
la position instantanée respective de la machine agricole à surveiller (5) est affichée sur l'écran (3).
